(19) Europäisches Patentamt
European Patent Office
Office européen des brevets

(11) **EP 3 128 598 B1**

(12) **FASCICULE DE BREVET EUROPEEN**

(45) Date de publication et mention de la délivrance du brevet:
**22.08.2018 Bulletin 2018/34**

(51) Int Cl.:
**H01M 10/39** (2006.01)

(21) Numéro de dépôt: **16187056.3**

(22) Date de dépôt: **12.07.2005**

(54) **UTILISATION D'UN ACCUMULATEUR ELECTROCHIMIQUE AU LITHIUM A HAUTE TEMPERATURE**

**VERWENDUNG EINER ELEKTROCHEMISCHEN LITHIUM-BATTERIE BEI HOHEN TEMPERATUREN**

**USE OF RECHARGEABLE LITHIUM BATTERY AT HIGH TEMPERATURE**

(84) Etats contractants désignés:
**DE FR GB**

(30) Priorité: **23.07.2004 FR 0408183**

(43) Date de publication de la demande:
**08.02.2017 Bulletin 2017/06**

(62) Numéro(s) de document de la (des) demande(s) initiale(s) en application de l'article 76 CBE:
**05291500.6 / 1 619 741**

(73) Titulaire: **SAFT**
**93170 Bagnolet (FR)**

(72) Inventeurs:
• **BONHOMME, Frédéric**
**Foothill Ranch**
**CA 92610 (US)**
• **BIENSAN, Philippe**
**33360 CARIGNAN DE BORDEAUX (FR)**
• **GERMOND, David**
**33110 LE BOUSCAT (FR)**
• **LALUQUE, Jean-Marc**
**33480 CASTELNAU DE MEDOC (FR)**

(74) Mandataire: **Hirsch & Associés**
**137, rue de l'Université**
**75007 Paris (FR)**

(56) Documents cités:
JP-A- 2004 139 853       US-A1- 2004 062 996
US-A1- 2004 072 072

## Description

DOMAINE TECHNIQUE

L'invention a pour objet l'utilisation d' un accumulateur électrochimique rechargeable au lithium apte à fonctionner en stockage ou en cyclage à très haute température (entre 120°C et 180°C).

ETAT DE LA TECHNIQUE

Les accumulateurs au lithium actuels possèdent de façon classique une anode de carbone capable d'insérer réversiblement du lithium, une cathode comprenant un oxyde lithié de métaux de transitions ($LiNiO_2$, $LiCoO_2$, $LiMnO_2$, $LiMn_2O_4$, etc.), un électrolyte constitué d'un sel de lithium dissous dans un solvant organique et un séparateur (en général polymère).

Ces accumulateurs ne sont pas adaptés à fonctionner à des températures supérieures à 60°C. En effet, à de telles températures, la dégradation rapide des composants actifs entraîne des pertes de capacités ainsi qu'une augmentation de la résistance interne de l'accumulateur, ce qui a pour effet de réduire considérablement sa durée de vie.

On recherche donc des accumulateurs électrochimiques au lithium ayant une durée de vie améliorée.

Le document EP-A-0548449 décrit un accumulateur à électrolyte non aqueux présentant une durée de vie améliorée en stockage à haute température (60°C) par l'utilisation d'un solvant composé du mélange de trois constituants: un carboxylate aliphatique, un carbonate cyclique et un carbonate linéaire.

Le document EP-A-0766332 décrit un accumulateur à électrolyte non aqueux présentant une durée de vie améliorée en stockage à 80°C et en cyclage à 45°C par l'utilisation d'un solvant constitué d'un mélange de carbonate cyclique et d'ester cyclique, d'un carbonate linéaire et d'un ester linéaire.

Le document US-A-5284722 décrit un accumulateur à électrolyte non aqueux présentant une durée de vie améliorée en stockage en charge à 60°C et en cyclage à 45°C par l'utilisation d'un solvant constitué d'un mélange de carbonate de propylène avec un ester.

Ces trois documents portent essentiellement sur des modifications de la formulation de l'électrolyte.

Le document WO-A-0209215 décrit un accumulateur lithium-ion capable de fonctionner à une température comprise entre 60°C et 250°C. Le matériau actif d'anode est constitué de $Li_4Ti_5O_{12}$. Le matériau actif de cathode est du lithium métallique. L'inconvénient d'un tel accumulateur est de délivrer une tension de fonctionnement de 1,4 V, plus faible que celle de 3,7 V, délivrée par un accumulateur à anode constituée de carbone. Ce document n'enseigne en outre dans les exemples que le cas du couple $Li_4Ti_5O_{12}$/Li.

La communication de l'Université de Delft intitulée "Development for a high-temperature Li-ion battery" (HITEN 2001, Oslo, 5-8 juin 2001) décrit un matériau actif d'anode constitué de $Li_4Ti_5O_{12}$ et un matériau actif de cathode constitué de $LiMn_2O_4$. Ce matériau actif de cathode se décompose à une température en fait relativement faible. La tension délivrée est de 2,7 V.

US2004/0062996 décrit l'utilisation d'un accumulateur à 150°C, avec un éther présent dans son solvant. Aucun des documents cités n'enseigne ni ne décrit le accumulateur selon l'invention.

RESUME DE L'INVENTION

L'invention propose l'utilisation d'un accumulateur électrochimique rechargeable au lithium à une température allant de 120°C à 180°C, ledit accumulateur comprenant une cathode, une anode comprenant soit $Li_4Ti_5O_{12}$ soit un matériau carboné capable d'insérer du lithium, un séparateur, un solvant non-aqueux et un sel de lithium, caractérisé en ce que le matériau actif de ladite cathode est un oxyde de métal lithié de formule

$LiNi_{1-x-y}Co_xAl/Mn_yO_2$ dans laquelle :
Al/Mn signifie Al et/ou Mn

$$0,15 < x < 0,33 \; ;$$

$$0,05 < y < 0,33;$$

la somme x+y étant inférieure à 0,66; ou choisi parmi $LiNi_{0,8}Co_{0,15}Al_{0,05}O_2$ et $LiNi_{0,55}Co_{0,15}Mn_{0,30}O_2$
et en ce que le sel de lithium est choisi dans le groupe consistant en $LiPF_6$, $LiBF_4$, LiBOB, LiBETI et un mélange de ceux-ci ;
et le solvant est choisi dans le groupe des carbonates cycliques ou est un mélange de ceux-ci.

L'accumulateur selon l'invention est adapté pour fonctionner jusqu'à une température de 180°C.

BREVE DESCRIPTION DES FIGURES

- La Figure 1 représente la variation de la capacité déchargée des accumulateurs des séries A, B et C de l'invention en fonction du nombre de cycles effectués, au cours du test de cyclage constitué de 5 cycles à 100°C, 10 cycles à 120°C et 5 cycles à 150°C.
- La Figure 2 représente la variation de l'impédance interne des accumulateurs des séries A, B et C selon l'invention en fonction du nombre de cycles effectués, au cours du test de cyclage constitué de 5 cycles à 100°C, 10 cycles à 120°C et 5 cycles à 150°C.
- La Figure 3 représente la variation de la capacité déchargée des accumulateurs des séries B, D et E de l'invention en fonction du nombre de cycles effectués, au cours d'un test de cyclage à 120°C

EXPOSE DETAILLE DE MODES DE REALISATION DE L'INVENTION

L'accumulateur comprend de façon générale une électrode positive (cathode) et une électrode négative (anode), un séparateur entre celles-ci et un électrolyte.

La cathode est une des parties qui caractérise l'accumulateur selon l'invention. Il est connu que $LiNiO_2$ en tant que tel ne présente pas une bonne stabilité à haute température. A haute température, $LiNiO_2$ est moins stable que les autres matériaux de cathode tels que $LiCoO_2$. De façon surprenante, ce matériau dans l'accumulateur selon l'invention a un comportement différent. L'invention propose un matériau de cathode à base de $LiNiO_2$ et de préférence obtenu par substitution dans $LiNiO_2$ d'une partie du nickel par du cobalt et/ou par de l'aluminium ou du manganèse. La matière active ainsi produite présente une bonne stabilité à haute température ainsi qu'une bonne capacité une fois dans l'accumulateur.

L'électrode positive comprend une matière électrochimiquement active qui est principalement un oxyde de métal lithié de formule $LiNi_{1-x-y}Co_xAl/Mn_yO_2$

dans laquelle:

Al/Mn signifie Al et/ou Mn,

$$0,15 < x < 0,33$$

et

$$0,05 < y < 0,33 \; ;$$

la somme x+y étant inférieure à 0,66 (1-x-y > 0,33) ou choisi parmi $LiNi_{0,8}Co_{0,15}Al_{0,05}O_2$ et $LiNi_{0,55}Co_{0,15}Mn_{0,30}O_2$.

Le matériau actif de ladite cathode est de façon générale un oxyde de métal lithié de structure lamellaire type R-3m.

Selon un mode de réalisation, la somme x+y est inférieure à 0,5.

Selon un mode de réalisation, la matière active de la cathode comprend du cobalt et de l'aluminium ou du manganèse.

On préférera les composés suivants: $LiNi_{0,8}Co_{0,15}Al_{0,05}O_2$ et $LiNi_{0,55}Co_{0,15}Mn_{0,30}O_2$.

L'électrode positive comprend également un liant tel que le fluorure de polyvinylidène (PVDF) ou un mélange de carboxyméthylcellulose (CMC) et de polymère Styrène-Butadiène (SBR) destiné à augmenter la tenue mécanique et la flexibilité de l'électrode. Elle comprend également en général des particules de carbone afin d'améliorer la conductivité électrique de l'électrode.

L'électrode négative est constituée principalement soit de $Li_4Ti_5O_{12}$, soit d'un matériau carboné capable d'insérer réversiblement du lithium tel que le graphite, le coke, le noir de carbone, le carbone vitreux ou un mélange de ceux-ci. Elle comprend également un liant tel que le fluorure de polyvinylidène (PVDF) ou un mélange de carboxylméthylcellulose (CMC) et de polymère de Styrène/Butadiène (SBR).

Le séparateur est en général un polymère possédant une température de fusion élevée, typiquement supérieure à 150°C tels que le polypropylène (PP), le polytétrafluoroéthylène (PTFE), le polyacrylonitrile (PAN), le polyéthylène-téréphtalate (PET) dont la surface peut être revêtue de céramique, et leurs mélanges. On préférera le polypropylène et le PET avec ou sans céramique, de préférence revêtu de céramique. L'électrolyte est un solvant organique choisi dans le groupe des carbonates cycliques, tels que le carbonate de propylène (PC) et le carbonate d'éthylène (EC), stables thermiquement ou est un mélange de ceux-ci. On préférera un mélange équimolaire PC/EC additionné de 2% de carbonate de vinylène (VC), tel que décrit dans la demande de brevet EP-A-0683537. Le carbonate de vinylène a notamment comme effet de stabiliser la couche de passivation formée sur l'électrode de carbone. En général, le solvant est tel qu'il a un point d'ébullition d'au moins 150°C, de préférence d'au moins 200°C.

Le sel utilisé est un sel de lithium choisi parmi les sels suivants: $LiPF_6$, $LiBF_4$, LiBOB (lithium Bis oxalatoborate), LiBETI (lithium bisperfluoroethylsulfonylimide) ou un mélange de ceux-ci. On préférera $LiPF_6$. A nouveau, ces sels ne sont pas très stables thermiquement, notamment $LiPF_6$ qui se décompose dès 80°C selon la réaction suivante:

$$LiPF_6 \rightarrow LiF + PF_5$$

De façon surprenante, ce sel dans l'accumulateur selon l'invention est particulièrement stable. La concentration du sel dans le solvant est variable, par exemple entre 0,5 et 1,5 molaire dans le solvant.

Les accumulateurs sont préparés de façon classique. Les électrodes sont préparées par enduction sur un feuillard métallique d'une encre constituée d'un mélange de matière active, de percolant (ex: carbone) et de liant dispersé dans un solvant. Une fois enduites, les électrodes sont séchées afin d'évaporer le solvant. Les feuillards sont en carbone ou en métal tel que par exemple le cuivre, le nickel, l'acier inox ou l'aluminium. On superpose l'électrode positive, le séparateur, l'électrode négative. On enroule l'ensemble pour former le faisceau électrochimique. Sur la tranche de l'électrode positive, on soude une pièce de connexion raccordée à la borne de sortie de courant. L'électrode négative est reliée électriquement au godet de l'accumulateur. Selon le format de l'accumulateur, la positive peut être au godet et la négative à une borne de sortie. Après insertion dans le godet, on imprègne le faisceau électrochimique avec l'électrolyte. On ferme ensuite l'accumulateur de façon étanche. Le godet est aussi classiquement équipé d'une soupape de sécurité (opercule), qui provoque l'ouverture de l'accumulateur lorsque la pression interne des gaz est supérieure à une valeur prédéterminée.

L'invention présente d'autres avantages que celui de prolonger la durée de vie de l'accumulateur et de permettre un fonctionnement à haute température. En effet, la baisse de la quantité de gaz généré à haute température limite les risques d'ouverture brutale du godet et d'inflammation de ces gaz, ce qui offre une sécurité accrue pour l'utilisateur.

La température à laquelle on peut utiliser l'accumulateur selon l'invention peut aller de 120°C à +180°C en particulier de 120°C à 150°C. L'accumulateur selon l'invention trouve à s'appliquer dans tous les domaines classiques, tels que appareils nomades ou fixes.

La présente invention concerne les accumulateurs au lithium de forme prismatique (électrodes planes) ou de forme cylindrique (électrodes spiralées) ou concentrique.

EXEMPLES

Les exemples suivants illustrent l'invention sans la limiter.

Cinq séries de deux accumulateurs lithium-ion de format 4/5A ont été fabriquées.

La première série d'accumulateurs, notée A, est constituée ainsi:

L'électrode positive est constituée en % en poids de:

- $LiCoO_2$ 93 %
- Carbone divisé 2 %
- Liant PVDF 5 %

L'électrode négative est constituée en % en poids de:

- Graphite 96 %
- Cellulose (CMC) 2 %
- SBR 2 %

L'électrolyte est constitué de 98 % en poids d'un mélange 50/50 de carbonate de propylène/carbonate d'éthylène (PC/EC) et de 2 % en poids de carbonate de vinylène (VC).

Le sel dissous dans cet électrolyte est l'hexafluorophosphate de lithium $LiPF_6$ une fois molaire.

Le séparateur est une membrane microporeuse en polypropylène.

La seconde série d'accumulateurs, notée B, diffère de la première série A uniquement par le fait que la matière active positive a été remplacée par une phase $LiNiO_2$ substituée, en particulier $LiNi_{0,8}Co_{0,15}Al_{0,05}O_2$.

La troisième série d'accumulateurs, notée C, diffère de la deuxième série B uniquement par le fait que le séparateur en polypropylène est remplacé par un séparateur en PTFE.

La quatrième série d'accumulateurs, notée D, diffère de la série A par une cathode constituée de

$LiNi_{0,55}Co_{0,15}Mn_{0,30}O_2$ et par un séparateur en polyéthylène-téréphtalate (PET) revêtu de céramique.

La cinquième série d'accumulateurs, notée E, diffère de la série B par un séparateur en polyéthylène-téréphtalate (PET) revêtu de céramique.

Le Tableau 1 récapitule les caractéristiques des accumulateurs assemblés:

Tableau 1

| Série | Matériau actif de cathode | Séparateur |
|---|---|---|
| A | $LiCoO_2$ | PP |
| B | $LiNi_{0,8}Co_{0,15}Al_{0,05}O_2$ | PP |
| C | $LiNi_{0,8}Co_{0,15}Al_{0,05}O_2$ | PTFE |
| D | $LiNi_{0,55}Co_{0,15}Mn_{0,30}O_2$ | PET+céramique |
| E | $LiNi_{0,8}Co_{0,15}Al_{0,05}O_2$ | PET+céramique |

Chaque type d'accumulateur est doublé pour les tests.

Les six accumulateurs des séries A, B et C sont soumis au test de cyclage thermique suivant:

- 5 cycles constitués d'une charge à température ambiante suivie d'une décharge sous un courant de 10mA à 100°C.

- 10 cycles constitués d'une charge à température ambiante suivie d'une décharge sous un courant de 10mA à 120°C.

- 5 cycles constitués d'une charge à température ambiante suivie d'une décharge sous un courant de 10mA à 150°C.

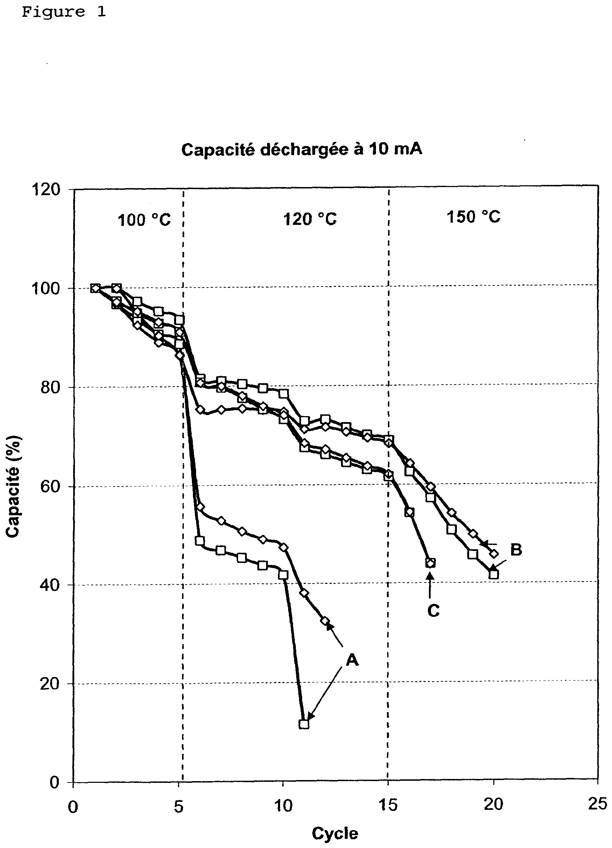

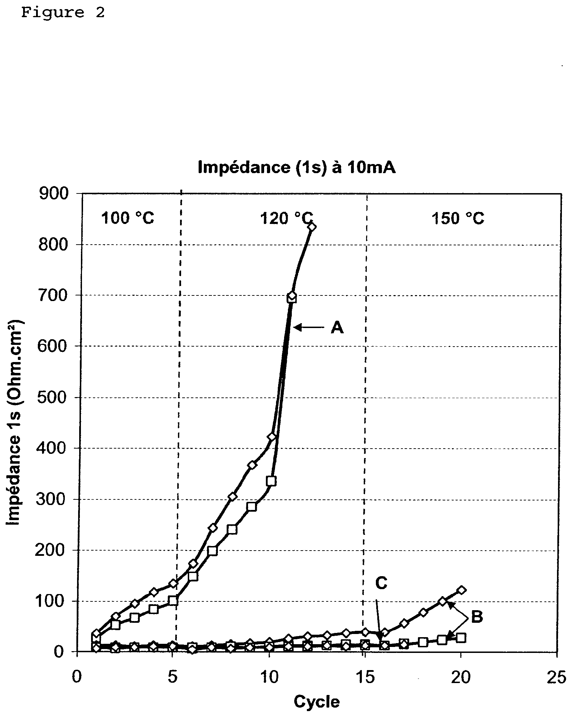

Les résultats de ce test sont reportés dans les Figures 1 et 2 et le Tableau 2.

Les six accumulateurs des séries B, D et E sont soumis au test de cyclage thermique suivant:

- 13 cycles constitués d'une charge à température ambiante suivie d'une décharge sous un courant de C/120 à 120°C.

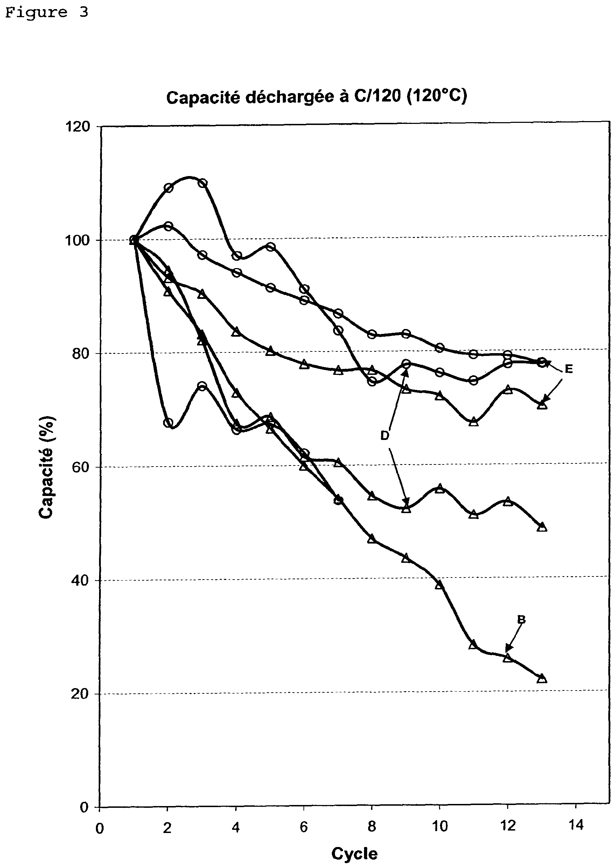

Les résultats de ce test sont présentés Figure 3.

Tableau 2.

| Série | Elément | Perte totale de capacité (%) | Remarques |
|---|---|---|---|
| A | A-1 | 88,6 | Court-circuit au cycle 11 |
| | A-2 | 67,7 | Court-circuit au cycle 12 |
| B | B-1 | 58,5 | - |
| | B-2 | 54, 3 | - |
| C | C-1 | 56,0 | Court-circuit au cycle 17 |
| | C-2 | 56,2 | Court-circuit au cycle 17 |

La figure 1 montre que:

- les accumulateurs de la deuxième série ont la perte totale de capacité la plus faible.
- les accumulateurs à cathode de $LiCoO_2$ de la série A sont défaillants aux cycles 11 et 12 alors que les accumulateurs à cathode en $LiNiO_2$ substitué de la série B sont encore opérationnels au cycle 20.
- les accumulateurs à séparateur de PP de la série B sont encore opérationnels au cycle 20, alors que les accumulateurs à séparateur de PTFE de la série C sont défaillants au cycle 17.

La figure 2 montre par ailleurs que l'impédance interne des accumulateurs à cathode de $LiCoO_2$ de la série A augmente très fortement au cours du cyclage en comparaison avec les accumulateurs à cathode de $LiNiO_2$ des séries B et C.

Ces essais montrent donc que les accumulateurs selon l'invention sont adaptés à un fonctionnement à haute température, en particulier les accumulateurs de la série B c'est-à-dire ceux à cathode en $LiNiO_2$ substitué et munis

d'un séparateur en PP.

La comparaison entre les courbes des séries B et E de la Figure 3 montre que la perte de capacité des accumulateurs E munis d'un séparateur de polyéthylène-téréphtalate (PET) revêtu de céramique est inférieure à la perte de capacité des accumulateurs B munis d'un séparateur de polypropylène, les matériaux d'électrodes et d'électrolyte étant identiques dans les deux séries.

D'autre part, la comparaison entre les courbes des séries D et E montre que la perte de capacité des accumulateurs D munis d'une cathode en $LiNi_{0,55}Co_{0,15}Mn_{0,30}O_2$ est comparable à la perte de capacité des accumulateurs E munis d'une cathode en $LiNi_{0,8}Co_{0,15}Al_{0,05}O_2$, les matériaux d'anode, les séparateurs et l'électrolyte étant identiques dans les deux séries D et E.

## Revendications

1. Utilisation d'un accumulateur électrochimique rechargeable au lithium à une température allant de 120°C à 180°C, ledit accumulateur comprenant une cathode, une anode comprenant soit $Li_4Ti_5O_{12}$, soit un matériau carboné capable d'insérer du lithium, un séparateur, un solvant non-aqueux et un sel de lithium, **caractérisé en ce que** :
   le matériau actif de ladite cathode est un oxyde de métal lithié de formule

$$LiNi_{1-x-y}Co_xAl/Mn_yO_2$$

   dans laquelle :

   Al/Mn signifie Al et/ou Mn
   $0,15 < x < 0,33$ ;
   $0,05 < y < 0,33$;
   la somme x+y étant inférieure à 0,66; ou choisi parmi $LiNi_{0,8}Co_{0,15}Al_{0,05}O_2$ et $LiNi_{0,55}Co_{0,15}Mn_{0,30}O_2$
   et **en ce que** le sel de lithium est choisi dans le groupe consistant en $LiPF_6$, $LiBF_4$, LiBOB, LiBETI et un mélange de ceux-ci ;
   et le solvant est choisi dans le groupe des carbonates cycliques ou est un mélange de ceux-ci.

2. Utilisation d'un accumulateur selon la revendication 1, dans laquelle le sel de lithium est le $LiPF_6$.

3. Utilisation d'un accumulateur selon l'une des revendications 1 à 2, dans laquelle l'anode comprend un matériau carboné capable d'insérer réversiblement le lithium.

4. Utilisation d'un accumulateur selon la revendication 3, dans laquelle le matériau carboné de l'anode est choisi dans le groupe consistant en graphite, coke, noir de carbone, carbone vitreux et un mélange de ceux-ci.

5. Utilisation d'un accumulateur selon l'une des revendications 1 à 4, dans laquelle le solvant non aqueux est choisi parmi le carbonate de propylène (PC) et le carbonate d'éthylène (EC).

6. Utilisation d'un accumulateur selon la revendication 5, dans laquelle le solvant non aqueux a un point d'ébullition d'au moins 150°C, de préférence d'au moins 200°C.

7. Utilisation d'un accumulateur selon l'une des revendications 1 à 6, dans laquelle le matériau du séparateur est choisi dans le groupe consistant en polypropylène, le polytétrafluoroéthylène, polyacrylonitrile, polyéthylène-téréphtalate, polyéthylène-téréphtalate revêtu de céramique, et leurs mélanges.

8. Utilisation d'un accumulateur selon la revendication 7, dans laquelle le matériau du séparateur est le PET revêtu de céramique ou le polypropylène.

9. Utilisation d'un accumulateur selon l'une des revendications précédentes dans laquelle l'utilisation est faite en stockage.

10. Utilisation d'un accumulateur selon l'une des revendications 1 à 9 dans laquelle l'utilisation est faite en cyclage.

11. Utilisation d'un accumulateur selon la revendication 10, dans laquelle l'étape de charge du cyclage est réalisée à température ambiante.

**12.** Utilisation d'un accumulateur selon la revendication 11, dans laquelle la température d'utilisation dudit accumulateur est de 150 à 180°C.

**Patentansprüche**

**1.** Verwendung eines wiederaufladbaren elektrochemischen Lithium-Akkumulators bei einer Temperatur in einem Bereich von 120 °C bis 180 °C, wobei der Akkumulator eine Kathode, eine Anode, die entweder $Li_4Ti_5O_{12}$ oder ein kohlenstoffhaltiges Material umfasst, das in der Lage ist, Lithium einzufügen, einen Separator, ein nicht wässriges Lösungsmittel und ein Lithiumsalz umfasst, **dadurch gekennzeichnet, dass**:

■ das aktive Material der Kathode ein lithiumhaltiges Metalloxid mit der Formel

$$LiNi_{1-x-y}Co_xAl/Mn_yO_2 \text{ ist,}$$

wobei:

- Al/Mn Al und/oder Mn bedeutet
- $0,15 < x < 0,33$;
- $0,05 < y < 0,33$;

wobei die Summe aus x+y kleiner als 0,66 ist;
oder unter $LiNi_{0,8}Co_{0,15}Al_{0,05}O_2$ und $LiNi_{0,55}Co_{0,15}Mn_{0,30}O_2$ ausgewählt ist;
■ und dadurch, dass das Lithiumsalz in der Gruppe ausgewählt ist, die aus $LiPF_6$, $LiBF_4$, LiBOB, LiBETI und einer Mischung daraus besteht;
■ und das Lösungsmittel aus der Gruppe der zyklischen Karbonate ausgewählt ist oder eine Mischung daraus ist.

**2.** Verwendung eines Akkumulators nach Anspruch 1, wobei das Lithiumsalz $LiPF_6$ ist.

**3.** Verwendung eines Akkumulators nach einem der Ansprüche 1 bis 2, wobei die Anode ein kohlenstoffhaltiges Material umfasst, das in der Lage ist, das Lithium reversibel einzufügen.

**4.** Verwendung eines Akkumulators nach Anspruch 3, wobei das kohlenstoffhaltige Material der Anode in der Gruppe ausgewählt wird, die aus Graphit, Koks, Ruß, Glaskohlenstoff und einer Mischung daraus besteht.

**5.** Verwendung eines Akkumulators nach einem der Ansprüche 1 bis 4, wobei das nicht wässrige Lösungsmittel unter Propylencarbonat (PC) und Ethylencarbonat (EC) ausgewählt ist.

**6.** Verwendung eines Akkumulators nach Anspruch 5, wobei das nicht wässrige Lösungsmittel einen Siedepunkt von mindestens 150 °C, vorzugsweise von mindestens 200 °C, aufweist.

**7.** Verwendung eines Akkumulators nach einem der Ansprüche 1 bis 6, wobei das Material des Separators in der Gruppe ausgewählt wird, die aus Polypropylen, Polytetrafluorethylen, Polyacrylnitril, Polyethylenterephthalat, mit Keramik beschichtetem Polyethylenterephthalat und ihren Mischungen besteht.

**8.** Verwendung eines Akkumulators nach Anspruch 7, wobei das Material des Separators mit Keramik oder Polypropylen beschichtetes PET ist.

**9.** Verwendung eines Akkumulators nach einem der vorhergehenden Ansprüche, wobei die Verwendung bei der Speicherung erfolgt.

**10.** Verwendung eines Akkumulators nach einem der Ansprüche 1 bis 9, wobei die Verwendung unter zyklischer Beanspruchung erfolgt.

**11.** Verwendung eines Akkumulators nach Anspruch 10, wobei der Ladeschritt der zyklischen Beanspruchung bei Umgebungstemperatur ausgeführt wird.

**12.** Verwendung eines Akkumulators nach Anspruch 11, wobei die Verwendungstemperatur des Akkumulators zwischen 150 und 180 °C beträgt.

**Claims**

**1.** Use of a rechargeable lithium electrochemical secondary cell at a temperature ranging from 120°C to 180°C, said secondary cell comprising a cathode, an anode comprising either $Li_4Ti_5O_{12}$ or a carbonaceous material capable of inserting lithium, a separator, a non-aqueous solvent and a lithium salt, **characterized in that**:
the active material of said cathode is a lithiated metal oxide of the formula $LiNi_{1-x-y}Co_xAl/Mn_yO_2$ wherein:
Al/Mn stands for Al and/or Mn
$0.15 < x < 0.33$;
$0.05 < y < 0.33$;
the sum $x + y$ being less than $0.66$ ; or chosen from the group comprising $LiNi_{0.8}Co_{0.15}Al_{0.05}O_2$ and $LiNi_{0.55}Co_{0.15}Mn_{0.30}O_2$
and **in that** the lithium salt is selected from the group consisting of $LiPF_6$, $LiBF_4$, LiBOB, LiBETI and a mixture thereof; and the solvent is selected from the group of cyclic carbonates or is a mixture thereof.

**2.** Use of a secondary cell according to claim 1, wherein the lithium salt is $LiPF_6$.

**3.** Use of a secondary cell according to one of claims 1 to 2, wherein the anode comprises a carbon material capable of reversibly inserting lithium.

**4.** Use of a secondary cell according to claim 3, wherein the carbon material of the anode is selected from the group consisting of graphite, coke, carbon black, vitreous carbon and a mixture thereof.

**5.** Use of a secondary cell according to one of claims 1 to 4, wherein the non-aqueous solvent is selected from propylene carbonate (PC) and ethylene carbonate (EC).

**6.** Use of a secondary cell according to claim 5, wherein the non-aqueous solvent has a boiling point of at least 150°C, preferably at least 200°C.

**7.** Use of a secondary cell according to one of claims 1 to 6, wherein the material of the separator is selected from the group consisting of polypropylene, polytetrafluoroethylene, polyacrylonitrile, polyethylene terephthalate, polyethylene terephthalate coated with ceramic, and their mixtures.

**8.** Use of a secondary cell according to claim 7, wherein the material of the separator is PET coated with ceramic or polypropylene.

**9.** Use of a secondary cell according to one of the preceding claims wherein the use is made during storage.

**10.** Use of a secondary cell according to one of claims 1 to 9 wherein the use is made during cycling.

**11.** Use of a secondary cell according to claim 10, wherein the charging step of the cycling is carried out at room temperature.

**12.** Use of a secondary cell according to claim 11, wherein the temperature of use of said secondary cell is 150 to 180°C.

Figure 1

**Capacité déchargée à 10 mA**

Figure 2

Impédance (1s) à 10mA

Figure 3

Capacité déchargée à C/120 (120°C)

## RÉFÉRENCES CITÉES DANS LA DESCRIPTION

**Documents brevets cités dans la description**

- EP 0548449 A
- EP 0766332 A
- US 5284722 A
- WO 0209215 A
- US 20040062996 A
- EP 0683537 A

**Littérature non-brevet citée dans la description**

- Development for a high-temperature Li-ion battery. HITEN. Université de Delft intitulée, 05 Juin 2001